# EUROPÄISCHE PATENTSCHRIFT

(11) **EP 2 663 422 B1**
(45) Veröffentlichungstag und Bekanntmachung des Hinweises auf die Patenterteilung: **14.05.2014**
(21) Anmeldenummer: 12700066.9
(22) Anmeldetag: 04.01.2012
(51) Int. Cl.: B23P 6/00, F01D 5/00, F01D 5/06

(54) **VERFAHREN ZUR REPARATUR VON VERDICHTER- ODER TURBINENTROMMELN**
METHOD FOR REPAIRING COMPRESSOR OR TURBINE DRUMS
PROCÉDÉ DE RÉPARATION DE TAMBOURS DE COMPRESSEUR OU DE TURBINE

(30) Priorität: 11.01.2011 DE 102011002532
(43) Veröffentlichungstag der Anmeldung: 20.11.2013
(73) Patentinhaber: Rolls-Royce Deutschland Ltd & Co KG, 15827 Blankenfelde-Mahlow (DE)
(72) Erfinder: WEISS, Elke, 63546 Hammersbach (DE); KAPPMEYER, Gregor, 61352 Bad Homburg (DE); STAPPENBECK, Florian, 12205 Berlin (DE)
(86) Internationale Anmeldenummer: PCT/EP2012/050094
(87) Internationale Veröffentlichungsnummer: WO 2012/095342

(56) Entgegenhaltungen:
- EP-A2- 1 881 202
- GB-A- 1 264 467
- US-A1- 2010 172 761

## Beschreibung

Die Erfindung betrifft ein Verfahren zur Reparatur von zwei- oder mehrstufigen Verdichter- oder Turbinentrommeln, bestehend aus über einen Schweißsteg miteinander verbundenen, separat oder integral beschaufelten Rotorscheiben, bei dem eine defekte Rotorscheibe spangebend abgetrennt und durch eine neue Rotorscheibe ersetzt wird.

Ein solches Verfahren ist aus der EP1881202 bekannt.

Aus zwei oder mehreren miteinander verschweißten Rotorscheiben bestehende zwei- oder mehrstufige Verdichtertrommeln von Gasturbinentriebwerken könnten bei Beschädigung einer oder mehrerer Stufen durch Austauschen der betreffenden Stufe repariert werden, indem die betreffende Rotorscheibe durch spanende Verfahren abgetrennt und unter Anwendung bekannter Fügeverfahren wie Elektronenstrahl- oder Reibschweißen durch eine neue Rotorscheibe ersetzt wird. Einer problemlosen Anwendung eines derartigen Reparaturverfahrens, mit dem auch mehrere Stufen ersetzt werden können, steht jedoch entgegen, dass bei einer spanenden Bearbeitung des Schweißnahtbereichs die ursprüngliche Schweißstoßdicke (Schweißsteglänge) verringert wird. Die daher zur Erzielung der validierten Schweißparameter erforderliche Anfertigung spezieller Rotorscheiben mit gegenüber den standardmäßigen Rotorscheiben veränderter Schweißstoßdicke ist jedoch mit einem erheblichen Aufwand verbunden oder unmöglich. Der Austausch einer beschädigten oder verschlissenen Verdichterstufe ist darüber hinaus auch deshalb nicht möglich, weil das lokale Aufschmelzen im Schweißbereich zur Ausbildung von Nahteinfallzonen und einer Verjüngung des Rotorscheibenflansches führt und bei einer anschließenden spangebenden Glättung des verjüngten Bereichs die geforderte Schweiß-nahtgeometrie nicht gewährleistet ist. Schließlich wird bei der spanenden Bearbeitung des Schweißnahtbereichs die in den dort ausgebildeten Plasmataschen vorhandene Beschichtung entfernt, so dass auch diesbezüglich ein unzulässiges Untermaß zu verzeichnen sein wird. Darüber hinaus können im Schweißnahtbereich liegende funktionsrelevante Elemente, wie beispielsweise Dichtungslippen, angeschmolzen und in ihrer Funktion beeinträchtigt werden.

Der Erfindung liegt die Aufgabe zugrunde, ein Verfahren zur Reparatur von geschweißten - zwei- oder mehrstufigen - Verdichter- oder Turbinentrommeln für eine Fluggasturbine anzugeben, das ohne unzulässige Änderung der ursprünglichen Gestaltung und Dimensionierung im Schweißnahtbereich und mit geringem Aufwand das Austauschen einer oder mehrerer defekter Rotorscheiben erlaubt.

Erfindungsgemäß wird die Aufgabe mit einem Verfahren gemäß den Merkmalen des Patentanspruchs 1 gelöst.

Vorteilhafte Weiterbildungen und zweckmäßige Ausgestaltungen der Erfindung sind Gegenstand der Unteransprüche.

Bei der Reparatur von geschweißten, zwei- oder mehrstufigen Verdichter- oder Turbinentrommeln, die nach dem Schweißen im Schweißnahtbereich spanend bis auf eine Höhe A bearbeitet werden, besteht der Grundgedanke der Erfindung darin, dass auf den spanend bearbeiteten Schweißnahtbereich ein sich beidseitig vom Schweißsteg erstreckender erster Materialauftrag mit einer Höhe B und auf den Bereich von auf der intakten Rotorscheibe ausgebildeten Plasmataschen ein zweiter, geringerer Materialauftrag durch ein geeignetes Verfahren (z.B. Laserschweißen) aufgebracht wird, wobei die Summe aus den Höhen A und B einer ursprünglichen Höhe C im Schweißnahtbereich vor dessen spanender Bearbeitung entspricht. Anschließend wird die defekte Rotorscheibe im Schweißsteg und mitten durch den ersten Materialauftrag abgetrennt und danach eine bereits im Neubau validierte neue Rotorscheibe mit den im Neubau validierten Schweißparametern angeschweißt. Im folgenden Schritt wird der Schweißnahtbereich entsprechend den bereits beim Neubau benutzten Parametern bis auf die ursprüngliche Höhe A spanend bearbeitet. Mit dem erfindungsgemäßen Verfahren können bei geschweißten und im Schweißnahtbereich spanend bearbeiteten Verdichter-oder Turbinentrommeln beschädigte oder verschlissene Rotorscheiben durch neue, bereits beim Neubau validierte Rotorscheiben ersetzt und mit den bereits beim Neubau validierten Parametern geschweißt und anschließend spanend bearbeitet werden. Mit geringem Aufwand können somit reparierte, mit dem Ursprungsbauteil übereinstimmende Verdichter- oder Turbinentrommeln zur Verfügung gestellt werden.

Gemäß einem weiteren Merkmal der Erfindung kann ein weiterer Materialauftrag auf nahe dem Schweißnahtbereich ausgebildete funktionsrelevante Elemente, die beim Schweißprozess gegebenenfalls angeschmolzen werden können, aufgebracht werden. Zur Herstellung der ursprünglichen Form wird dieser Materialauftrag anschließend spanend bearbeitet.

In Ausgestaltung der Erfindung wird zum Abbau der durch die Schweißverbindung und das Laserschweißen erzeugten Eigenspannungen eine Wärmebehandlung durchgeführt.

In weiterer Ausgestaltung der Erfindung bestehen die Rotorscheiben aus einer Titan- oder Nickelbasislegierung.

In weiterer Ausgestaltung der Erfindung erfolgt die Herstellung der Schweißverbindung durch Elektronenstrahlschweißen oder Reibschweißen.

In weiterer Ausgestaltung der Erfindung können zwei oder mehrere defekte Rotorscheiben und/oder Abstandsringe gegen intakte, im Neubau validierte Rotorscheiben und/oder Abstandsringe ausgetauscht werden

Ein Ausführungsbeispiel der Erfindung wird anhand der Zeichnung, in der
- Fig. 1: eine Schnittansicht eines Teils einer geschweißten mehrstufigen Verdichtertrommel vor dem Abtrennen einer verschlissenen Rotorscheibe; und
- Fig. 2: die Verdichtertrommel nach dem Abtrennen der verschlissenen Rotorscheibe und dem Anschweißen einer neuen Rotorscheibe
zeigt, näher erläutert.

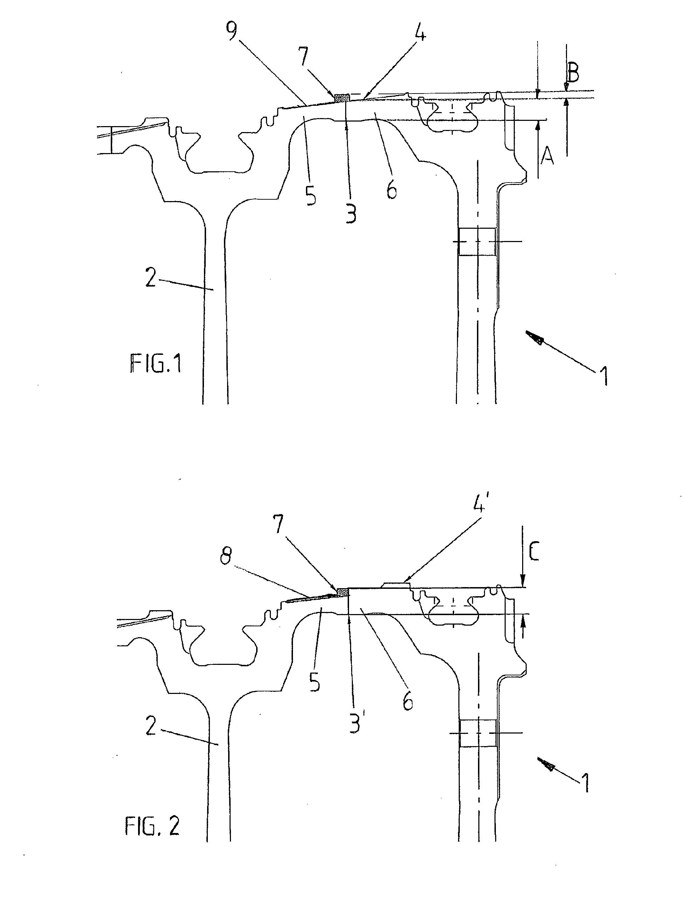

Die in Fig. 1 dargestellte, für eine separate Beschaufelung ausgebildete mehrstufige Verdichtertrommel 1 für ein Gasturbinentriebwerk weist eine mit einer intakten Rotorscheibe 2 über einen umlaufenden Schweißsteg 3 verbundene defekte (verschlissene oder beschädigte) Rotorscheibe 4 auf. Die defekte Rotorscheibe 4 soll gegen eine bereits bei der ursprünglichen Herstellung der Verdichtertrommel 1 zugelassene (validierte) Rotorscheibe 4' ausgetauscht werden. Der Schweißsteg 3 hat hier eine nach der spanenden Bearbeitung reduzierte Höhe A.

An der Verbindungsstelle zwischen der intakten Rotorscheibe 2 und der beschädigten Rotorscheibe 4 erfolgt - in einem ersten Verfahrensschritt - auf der radial außen liegenden, spanend bearbeiteten Fläche der beiden Flansche 5, 6 der Rotorscheiben 2, 4 ein erster größerer Materialauftrag 7 mittels Laserschweißen, der sich nach beiden Seiten über die Stirnfläche des Schweißsteges 3 hinaus erstreckt. Die Höhe B des Materialauftrages 7 ist so gewählt, dass die Gesamthöhe (A + B) im Bereich des Schweißsteges 3 einen Wert C erreicht, der der Höhe des Schweißsteges 3' (Fig. 2) beim Verschweißen der Rotorscheiben im Neubau vor der spanenden Bearbeitung entspricht.

In einem zweiten Verfahrensschritt erfolgt ein zweiter, geringerer (dünner) Materialauftrag 8 durch Laserschweißen im Bereich der auf der Außenfläche des Flansches 5 der Rotorscheibe 2 ausgebildeten Plasmatasche 9. In dem darauffolgenden dritten Verfahrensschritt wird die auszutauschende defekte Rotorscheibe 4 genau im Schweißsteg 3 und mitten durch den ersten Materialauftrag 7 hindurch von der intakten Rotorscheibe 2 mit Hilfe eines spangebenden oder alternativ nicht spangebenden Trennverfahrens abgetrennt.

Aufgrund der in den vorhergehenden Verfahrensschritten wieder aufgebauten -ursprünglich im Neubau vorhandenen - Höhe C des Flansches 5 der Rotorscheibe 2 kann jetzt im fünften Verfahrensschritt eine bereits im Neubau validierte, neue Rotorscheibe 4' mit einer Höhe C an der Stirnseite des Flansches 6 bereitgestellt werden und im anschließenden sechsten Verfahrensschritt - mit den bereits im Neubau validierten Schweißparametern - mit der intakten Rotorscheibe 2 der Verdichtertrommel 1 verschweißt werden.

Im siebten Verfahrensschritt erfolgt eine spanende Bearbeitung des Schweißnahtbereichs mit einem auch im Neubau üblichen Materialabtrag. Der dabei auch im Bereich der Plasmataschen 9 erfolgende Materialabtrag wird durch den im zweiten Verfahrensschritt in diesem Bereich aufgebrachten zweiten Materialauftrag 8 genauso kompensiert wie durch das lokale Aufschmelzen in der Schweißzone entstehende Nahteinfallzonen, so dass nach der Fertigbearbeitung auch hier die ursprüngliche, vorgegebene Geometrie erzeugt werden kann.

Gemäß einem - in der Zeichnung nicht dargestellten - achten Verfahrensschritt kann ein dritter Materialauftrag durch Laserschweißen an funktionsrelevanten Elementen, wie beispielsweise an einem Flansch einer Rotorscheibe nahe dem Schweißsteg angeformten Dichtungslippen für eine Labyrinthdichtung, erfolgen, deren Geometrie bei der Herstellung der Schweißverbindung zwischen den beiden Rotorscheiben 2, 4' durch Anschmelzen verändert werden kann. Nach der Herstellung der Schweißverbindung können die Dichtlippen in dem dritten Materialauftrag durch spanende Bearbeitung ausgeformt werden.

Im neunten und letzten Verfahrensschritt erfolgt - wie im Neubau nach dem Fügen der einzelnen Rotorscheiben zu einer mehrstufigen Verdichtertrommel - eine Wärmebehandlung zum Abbau der sowohl durch die Schweißverbindung (z. B. Elektronenstrahlschweißen oder Reibschweißen) als auch durch den Materialauftrag 7, 8 beim Laserauftragsschweißen erzeugten Eigenspannungen.

Mit dem zuvor beschriebenen Reparaturverfahren können eine oder mehrere, an unterschiedlichen Stellen befindliche, verschlissene oder beschädigte Rotorscheiben durch intakte, bereits beim Neubau der Verdichtertrommel 1 validierte Rotorscheiben ersetzt werden, und zwar mit den gleichen Parametern, Prozessen und Vorrichtungen wie beim Neubau. Das Verfahren kann zudem bei unterschiedlichen Werkstoffen, wie zum Beispiel Titan- oder Nickelbasiswerkstoffen, und bei Verdichter- oder Turbinentrommeln mit separater oder integraler Beschaufelung eingesetzt werden, wenn eine Reparatur einzelner Schaufeln technisch nicht möglich oder unwirtschaftlich ist, und zwar in den Fällen, in denen ein Nachschweißen erlaubt ist und der Schweißbereich spanend nachbearbeitet werden muss. Das Verfahren kann gleichermaßen in Verbindung mit den an unterschiedlichen Stellen der Trommel angeordneten Abstandsringen angewendet werden.

### Bezugszeichenliste

- 1: Verdichtertrommel
- 2: intakte Rotorscheibe von 1
- 3: Schweißsteg (Schweißstoß, Schweißnaht)
- 3': Schweißsteg vor Nachbehandlung
- 4: defekte Rotorscheibe
- 4': neue, im Neubau validierte Rotorscheibe
- 5: Flansch von 2
- 6: Flansch von 4
- 7: erster Materialauftrag auf 3 (groß)
- 8: zweiter Materialauftrag auf 9 (dünn)
- 9: Plasmatasche von 2
- A: Höhe des Schweißsteges 3 nach spanender Bearbeitung
- B: Höhe des ersten Materialauftrages 7
- C: Höhe des Schweißsteges 3' (A + B)

## Patentansprüche

1. Verfahren zur Reparatur von zwei- oder mehrstufigen Verdichter- oder Turbinentrommeln, bestehend aus über einen Schweißsteg (3) miteinander verbundenen und im Schweißnahtbereich bis auf eine Höhe A spanend bearbeiteten, separat oder integral beschaufelten Rotorscheiben (2, 4), bei dem eine oder mehrere defekte Rotorscheiben (4) spangebend oder auf andere Weise von einer intakten Rotorscheibe (2) abgetrennt und durch eine neue Rotorscheibe (4') ersetzt wird, **dadurch gekennzeichnet, dass** auf den spanend bearbeiteten Schweißnahtbereich ein sich beidseitig vom Schweißsteg (3) erstreckender erster Materialauftrag (7) mit einer Höhe B und auf den Bereich von auf der intakten Rotorscheibe (2) ausgebildeten Plasmataschen (9) ein zweiter, geringerer Materialauftrag (8) durch Laserschweißen aufgebracht wird, wobei die Summe aus den Höhen A und B einer ursprünglichen Höhe C im Schweißnahtbereich vor dessen spanender Bearbeitung entspricht, anschließend die defekte Rotorscheibe (4) im Schweißsteg (3) und mitten durch den ersten Materialauftrag (7) abgetrennt und danach eine bereits im Neubau validierte neue Rotorscheibe (4') mit den im Neubau validierten Schweißparametern angeschweißt wird und schließlich der Schweißnahtbereich entsprechend den beim Neubau benutzten Parametern bis auf die Höhe A spanend bearbeitet wird.

2. Verfahren nach Anspruch 1, **dadurch gekennzeichnet, dass** ein dritter Materialauftrag auf nahe dem Schweißnahtbereich ausgebildete funktionsrelevante Elemente wie Dichtlippen aufgebracht wird, der zur Herstellung der ursprünglichen Form anschließend spanend bearbeitet wird.

3. Verfahren nach Anspruch 1 oder 2, **dadurch gekennzeichnet, dass** zum Abbau der durch die Schweißverbindung und das Laserschweißen erzeugten Eigenspannungen eine Wärmebehandlung durchgeführt wird.

4. Verfahren nach Anspruch 1, **dadurch gekennzeichnet, dass** die Rotorscheiben (2, 4, 4') aus einer Titan-oder Nickelbasislegierung bestehen.

5. Verfahren nach Anspruch 1, **dadurch gekennzeichnet, dass** die Herstellung der Schweißverbindung durch Elektronenstrahlschweißen oder Reibschweißen erfolgt.

6. Verfahren nach einem der Ansprüche 1 bis 5, **dadurch gekennzeichnet, dass** zwei oder mehrere defekte Rotorscheiben und/oder Abstandsringe gegen intakte, im Neubau validierte Rotorscheiben und/oder Abstandsringe ausgetauscht werden.

## Claims

1. Method for repairing two-stage or multi-stage compressor or turbine drums, consisting of rotor disks (2, 4), which have separate or integral blades and are machined in the weld area down to a height A and connected to one another by a root face (3), by which method one or more defective rotor disks (4) are separated by metal-cutting or by another method from an intact rotor disk (2) and replaced by a new rotor disk (4'), **characterized in that** a first material coating (7) with a height B extending on both sides from the root face (3) is applied by laser welding to the machined weld area, and a second and lesser material coating (8) is applied by laser welding to the area of plasma pockets (9) formed on the intact rotor disk (2), with the total of the heights A and B corresponding to an original height C in the weld area prior to its machining, that the defective rotor disk (4) is subsequently detached in the root face (3) and through the middle of the first material coating (7), and after that a new rotor disk (4') already validated in the new construction is welded on using the welding parameters validated in the new construction, and that finally the weld area is machined, in line with the parameters used for the new construction, down to the height A.

2. Method in accordance with Claim 1, **characterized in that** a third material coating is applied to function-relevant elements, such as sealing lips, provided close to the weld area, said coating being subsequently machined to achieve the original shape.

3. Method in accordance with Claim 1 or 2, **characterized in that** a heat treatment is conducted to reduce the residual stresses caused by the welded connection and by laser welding.

4. Method in accordance with Claim 1, **characterized in that** the rotor disks (2, 4, 4') are made of a titanium-based or nickel-based alloy.

5. Method in accordance with Claim 1, **characterized in that** the welded connection is made by electron beam welding or friction welding.

6. Method in accordance with one of the Claims 1 to 5, **characterized in that** two or more defective rotor disks and/ or spacer rings are replaced by intact rotor disks and/ or spacer rings validated in the new construction.

## Revendications

1. Procédé de réparation de tambours de compresseur ou de turbine biétagés ou polyétagés constitués de disques de rotor (2, 4) à aubage séparé ou intégré reliés entre eux par une nervure de soudure (3) et usinés par enlèvement de copeaux jusqu'à une hauteur A dans la zone de soudure, selon lequel un ou plusieurs disque(s) de rotor (4) défectueux est/sont détaché(s) d'un disque de rotor intact (2) par enlèvement de copeaux ou d'une autre manière et remplacé(s) par un disque de rotor neuf (4'), **caractérisé en ce que** sur la zone de soudure usinée par enlèvement de copeaux est appliquée par soudage au laser une première charge de matière (7) s'étendant des deux côtés de la nervure de soudure (3) avec une hauteur B, et sur la zone de poches de plasma (9) formées sur le disque de rotor intact (2) est appliquée par soudage au laser une deuxième charge de matière (8) plus faible, sachant que la somme des hauteurs A et B correspond à une hauteur initiale C dans la zone de soudure avant son usinage par enlèvement de copeaux, qu'ensuite le disque de rotor défectueux (4) est détaché dans la nervure de soudure (3) et à travers le milieu de la première charge de matière (7), qu'après un disque de rotor neuf (4') déjà validé dans la construction neuve est soudé avec des paramètres de soudage validés dans la construction neuve, et que finalement la zone de soudure est usinée par enlèvement de copeaux jusqu'à la hauteur A conformément aux paramètres utilisés dans la construction neuve.

2. Procédé selon la revendication n°1, **caractérisé en ce qu'**une troisième charge de matière est appliquée sur des éléments fonctionnels, tels que des lèvres d'étanchéité, formés à proximité de la zone de soudure, ladite charge étant ensuite usinée par enlèvement de copeaux afin d'obtenir la forme initiale.

3. Procédé selon la revendication n°1 ou n°2, **caractérisé en ce qu'**un traitement thermique est effectué pour relâcher les contraintes résiduelles générées par l'assemblage par soudure et le soudage au laser.

4. Procédé selon la revendication n°1, **caractérisé en ce que** les disques de rotor (2, 4, 4') sont constitués d'un alliage à base de titane ou de nickel.

5. Procédé selon la revendication n°1, **caractérisé en ce que** l'assemblage par soudure est réalisé par soudage par bombardement électronique ou par soudage par friction.

6. Procédé selon une des revendications n°1 à n°5, **caractérisé en ce que** deux ou plusieurs disques de rotor et/ ou anneaux entretoises défectueux sont échangés contre des disques de rotor et/ ou anneaux entretoises intacts validés dans la construction neuve.
